# EUROPEAN PATENT SPECIFICATION

(11) **EP 1 924 491 B1**
(45) Date of publication and mention of the grant of the patent: **02.11.2011**
(21) Application number: 06792073.6
(22) Date of filing: 14.09.2006
(51) Int. Cl.: B64C 1/00, B64C 1/40, B64D 45/00

(54) **AIRCRAFT FUSELAGE**
FLUGZEUGRUMPF
FUSELAGE D'AERONEF

(30) Priority: 15.09.2005 US 717217 P; 16.09.2005 DE 102005044378
(43) Date of publication of application: 28.05.2008
(73) Proprietor: Airbus Operations GmbH, 21129 Hamburg (DE)
(72) Inventor: MÜLLER, Rainer, 21224 Rosengarten (DE)
(74) Representative: Kopf, Korbinian Paul
(86) International application number: PCT/EP2006/008979
(87) International publication number: WO 2007/031321

(56) References cited:
- GB-A- 1 446 335
- US-A- 5 102 723
- US-A1- 2002 160 198
- US-B1- 6 286 785
- US-B1- 6 612 217

## Description

This application claims the benefit of the filing date of United States Provisional Patent Application No. 60/717 217 filed September 15, 2005 and of German Patent Application No. 10 2005 044 378.8 filed September 16, 2005.

The present invention provides an aircraft fuselage, particularly a bulletproof aircraft fuselage.

Conventional insulation systems in passenger aircraft construction essentially comprise a core material and an envelope. The core material fulfills requirements in regard to thermal and acoustic insulation. These are mostly materials from the fiber industry. Above all, fiberglass materials are used. In order that these relatively amorphous semifinished products become mountable, they are enclosed by an envelope film. Reinforcements are attached to the ends of the envelope films in order to then attach the insulation package with the aid of fasteners to the aircraft fuselage structure. The fasteners typically comprise plastics such as polyamide.

A bulletproof aircraft fuselage is known from US 6,612,217, which is regarded as the closest prior art and discloses all the features of the preamble of the independent claim 1.

A typical fuselage insulation is known, for example, from DE 10 2004 001 049 and is schematically shown in Figure 11. Such a fuselage insulation comprises insulation material 1102, which is enclosed by an envelope 1108. The insulation material 1102 is attached to a frame 1119 of an aircraft fuselage using a first fastener 1105 and a second fastener 1106.

From DE 102 52 886 a skin panel mounting for an aircraft is known having an armored panel attached to the airframe to resist projectiles or emissions. The modular panel has a groove having at least two through bores. A mounting rail is positioned in the groove and has cut outs which can be aligned with the through bores which receive mounting bolts.

From US 6 286 785 an aircraft mechanical structural system is known which provides an improvement to the existing aircraft structure by reinforcing the fuselage frame aluminum skin and fuselage frame, without replacement of any of the existing structural elements. The improvement is comprised of high performance, solid fabric fuselage section jackets, fuselage frame metal external paneling, and a thermal and cryogenic resistant adhesive.

From US 5 102 723 a lightweight hybrid structural energy-absorbing panel is known having a plurality of layers of soft energy-absorbing material, such as Kevlar, disposed between facesheets with a plurality of rigid rod members extending between the facesheets through the layers of energy-absorbing material to structurally connect the facesheets, such panel to absorb the energy of ballistic projectiles.

From US 2 925 098 an improved ballistic fabric and more particularly to an improved ballistic for resisting penetration by flying fragments, missiles and the like, is known.

From US 5 654 518 a double truss structural armor component is known including a first face sheet, an intermediate sheet opposing the first face sheet, a first truss core member sandwiched between the first face sheet and the intermediate sheet, a second face sheet opposing the intermediate sheet, a second truss core member sandwiched between the second face sheet and the intermediate sheet, and laminate materials disposed within interior flutes of the first and second truss core members.

From US 3 575 786 a dual layer composite laminate consisting of ballistic nylon felt with a peripheral seal coat and a urethane elastomer, bonded to the internal surface of a wall, or other part of vehicle structure, is known.

An object of the present invention as claimed in claim 1 is to provide an aircraft fuselage which meets modem requirements.

According to one exemplary embodiment of the present invention, the above object is achieved using an aircraft fuselage which has a bulletproof layer in at least partial areas.

A basic idea of an exemplary embodiment of the present invention may be seen as equipping an aircraft fuselage in at least partial areas with a bulletproof layer. In the present application, an aircraft fuselage is understood as both a primary fuselage structure of an aircraft, i.e., sheeting and frames associated therewith and stringers, aircraft fuselage insulation, and also cabin internal paneling, which encloses a pressurized cabin to the outside toward the primary fuselage structure. However, an internal structure in the pressurized cabin, such as a cockpit door, is not understood as part of the aircraft fuselage, since this does not enclose the pressurized cabin to the outside.

Using an aircraft fuselage according to an exemplary embodiment of the present invention, it may be possible to ensure that the aircraft fuselage is bulletproof, both in civil aircraft and also in military aircraft, in contrast to standard aircraft fuselages, which do not have any special properties in regard to being bulletproof. This lack of special properties in regard to being bulletproof may result in danger in civil passenger aircraft in particular, in which threats through aircraft hijackings or assassinations may occur again and again, in which a danger of a shot being fired may be quite high. In this case, the aircraft may be fired at both from the inside to the outside and also from the outside to the inside. In both cases, passengers may be endangered. The fuselage construction according to the present invention may contribute to protecting the passengers in that it possibly prevents projectiles from penetrating the aircraft fuselage. The occupants may thus possibly be protected from life-threatening injuries.

The aircraft fuselage according to the present invention may also possibly prevent flight-relevant systems of the aircraft from being damaged, this damage being able to impair the flight capability of the passenger or military aircraft and also being a great disadvantage for the passengers. According to an exemplary embodiment of the present invention, the outer skin, the aircraft insulation, and the internal paneling are prevented from being designed so that they cannot withstand a shot, this prevention possibly being more and more important in the future to increase the safety of the passengers even in the case of terror attacks using firearms.

Therefore, it may be possible according to an exemplary embodiment of the present invention to provide an aircraft fuselage which meets modem requirements better than typical aircraft fuselages.

Further objects, embodiments and advantages of the present invention result from the independent claims and the dependent claims.

Exemplary embodiments of the present invention are described in greater detail in the following.

According to one exemplary embodiment, the bulletproof layer comprises multiple webs (Bahnen), the multiple webs preferably being situated partially overlapping.

Through such an at least partial overlap of individual webs, it may possibly be ensured that the projectiles may be prevented from penetrating in the area of adjoining webs, which may be implemented in the form of films or blankets.

According to a further exemplary embodiment, the bulletproof layer comprises fibrous materials, the fibrous materials preferably being aromatized polyamides and/or fiberglass materials.

Therefore, bulletproof fibrous materials which are known from other fields, for example, in bulletproof vests, may be used as the bulletproof layer. Such fibrous materials may be aromatized polyamides, which are known under the product name Kevlar, for example. Aromatized polyamides, also called aramids, may also have the advantage that they are especially flame resistant. Therefore, the new burn-through requirements may possibly also be fulfilled using these materials, which are required by the American aviation authorities in FAR§25.856(b), for example. Aramid is additionally a light construction material, which is especially distinguished by high strength, high ductile yield, and great resistance to media such as acids and bases and therefore possibly represents an especially suitable material for the aeronautics industry.

A bulletproof layer may also be implemented through the use of so-called S glass, i.e., fiberglass materials, at a specific thickness of the fiberglass materials.

According to another exemplary embodiment, the bulletproof layer comprises a sandwich structure.

In particular in connection with fiberglass materials, honeycomb sandwich constructions may possibly be used to implement a bulletproof layer. Such a construction is used, for example, in bulletproof cockpit doors according to FAR§25.772. Other combinations of aramid fibers, for example, the fibers known under the product names Dyneema, and foam materials may be implemented as bulletproof in the form of sandwich constructions.

According to an exemplary embodiment, the aircraft fuselage also comprises an insulation structure, which comprises a core material and an envelope, the envelope having the bulletproof layer and/or the bulletproof layer being implemented in the core material. In particular, the core material itself may be implemented as the bulletproof layer and/or an additional bulletproof layer may be implemented in the core material. However, also other parts than the core material, e.g. the envelope, may be implemented as the bulletproof layer, i.e. a part of the insulation structure may be formed to be bulletproof.

The core material of the insulation structure, also called an insulation package, may possibly be implemented as bulletproof. The core material possibly not only assumes the function of a bullet trap, but rather also the typical thermal and acoustic properties of insulation, i.e., an additional layer for thermal insulation and/or acoustic insulation is no longer necessary. The newest required burn-through safety properties of the insulation according to FAR§25.856(b) may possibly also be assumed by the bullet trap. Such a bulletproof aircraft fuselage insulation possibly has advantage that aircraft already in service, i.e., aircraft which are already used, may be retrofitted using such a bulletproof insulation by merely replacing the existing fuselage insulation, this replacement being performed in aircraft in operation at regular intervals in any case.

Alternatively or cumulatively to the use of the insulation material of the insulation structure as a bullet trap, insulation packages having typical core material may also be used, in which insulation packages an additional bullet trap, i.e., a bulletproof layer, is implemented. This is possibly especially advantageous if it is not possible to use a core material in the insulation which is both bulletproof and also fulfills all other aircraft-relevant requirements such as weight, acoustics, and thermal properties. The typical insulation packages may be adapted relatively effectively if the additional bullet trap is integrated in the insulation package.

According to a further exemplary embodiment, the envelope is implemented as the bulletproof layer.

In addition to the core material, an insulation package also comprises an envelope, which may be implemented as a plastic envelope using a bulletproof film. This film possibly causes a corresponding fired projectile to be captured or at least braked enough that passengers of the aircraft are not injured. The insulation structure is essentially situated between a fuselage structure of the aircraft and system installations of the aircraft, through which the system installations of the aircraft are possibly also protected when fired upon from the outside.

According to another exemplary embodiment, an aircraft fuselage also comprises passenger cabin paneling, the bulletproof layer being implemented as part of the passenger cabin paneling.

The implementation of a bulletproof cabin by modifying the cabin paneling is a further possibility for implementing a bulletproof aircraft fuselage. Since the cabin paneling encloses the aircraft cabin essentially completely, it is possible to ensure additional protection for the passengers located therein even in case of a shot at the aircraft if bulletproof materials are used for the paneling parts. The same bulletproof materials come into consideration for the cabin paneling as for the bulletproof fuselage insulation, e.g., aramid fibers. The cabin paneling parts may also be equipped with secondary paneling, i.e., insulation which is attached directly behind the paneling. This secondary paneling may be implemented similarly as the bulletproof fuselage insulation described above. For example, it may be implemented in a sandwich construction, which is possibly a construction well suitable for bulletproof materials such as aramid fibers. For example, typically used fiberglass fabrics may be replaced by aramid fabrics, as are used in bulletproof automobiles, for example. Similar technologies have also already been applied in bulletproof cockpit doors, which must be used in passenger aircraft construction according to the American authorization requirements FAR§25.772. However, the applications up to this point have been restricted solely to the cockpit door, which is not a part of the aircraft fuselage according to this application. The bulletproof paneling may be combined with a bulletproof isolation structure.

Bulletproof cabin paneling possibly has advantage that an essentially closed bulletproof surface may be implemented. The possibility of projectile breakthrough may thus be minimized and the effectiveness in regard to being bulletproof may be elevated. In particular, no passages possibly result in the bulletproofing, as may still occur under certain circumstances with bulletproof fuselage insulation, since the fuselage insulation may have multiple openings because of system installations. This has the effect that a projectile breakthrough may still be possible under certain circumstances even when special precautions are taken.

Bulletproof cabin paneling may possibly also protect aircraft systems which are located behind the cabin paneling, i.e., between the cabin paneling and the fuselage structure, in case of a shot from the inside to the outside.

According to another exemplary embodiment, the aircraft fuselage also comprises a primary fuselage structure, the primary fuselage structure comprising the bulletproof layer. The fuselage structure preferably comprises sheeting which has the bulletproof layer.

Such an embodiment of a bulletproof fuselage structure may possibly represent an efficient protection against projectiles which penetrate from the outside to the inside. Sheeting, which may be attached to an outer skin of the primary fuselage structure of the aircraft, for example, is possibly especially effective for protecting passengers, since the sheeting is farthest away from the passengers and prevents the penetration where it occurs. If the primary fuselage structure is produced from bulletproof materials or comprises these bulletproof materials as a layer, such as aramid fabrics, in the event of a shot from the outside, both occupants of the aircraft and also flight-relevant systems, which are located inside the outer skin, may be protected.

According to an exemplary refinement, the bulletproof layer is implemented using a composite made of carbon fibers and/or glass fibers and resin.

It is also possible to optimize the hybrid constructions used in some areas of aircraft construction, which comprise aluminum and carbon fibers and/or glass fibers bonded to resin systems, in regard to being bulletproof. This would possibly represent an especially efficient achievement of the object of providing a bulletproof aircraft fuselage. Aramid fabrics may possibly also be used here, since these may be implemented in an especially light construction and are especially well suitable for aircraft construction. For this purpose, it is advantageous to sheet only the outer skin of the aircraft with this material, in order to manage with as little material as possible and thus save weight. In other words, a bulletproof layer is applied externally to the aircraft fuselage. The stiffening elements responsible for the structural integrity of the aircraft fuselage, called stringers and frames, may still be produced from typical materials, since they are already situated on the interior of the outer skin of the aircraft and are protected from a shot by the bulletproof sheeting.

It is possibly especially advantageous with a bulletproof embodiment of the aircraft fuselage that no additional components are necessary, which may be especially cost-effective and weight-neutral. In addition, a passenger may be optimally protected against shots at the cabin from the outside in comparison to other solutions. The flight-relevant systems housed in the aircraft fuselage are possibly also optimally protected, through which high operational reliability of the aircraft in regard to terroristic attacks from the outside may be ensured.

It is to be noted that features or steps which have been described with reference to one of the above exemplary embodiments or with reference to one of the above aspects may also be used in combination with other features or steps of other exemplary embodiments or aspects described above.

In the following, the present invention will be described in greater detail on the basis of exemplary embodiments with reference to the figures, in which identical or similar elements are provided with identical or similar reference signs.
Figure 1 shows a schematic illustration of a bulletproof envelope of an insulation package according to an exemplary embodiment of the present invention;
Figure 2 shows a schematic illustration of an insulation package having a bulletproof core material according to another exemplary embodiment of the present invention;
Figure 3 shows a schematic illustration of an insulation package having an additional bullet trap according to another exemplary embodiment of the present invention;
Figure 4 shows a schematic illustration of bulletproof insulation according to an exemplary embodiment of the present invention;
Figure 5 shows a schematic illustration of bulletproof aircraft fuselage insulation according to an exemplary embodiment of the present invention;
Figure 6 shows a schematic illustration of a bulletproof aircraft cabin according to an exemplary embodiment of the present invention;
Figure 7 shows a schematic illustration of a bulletproof aircraft fuselage according to an exemplary embodiment of the present invention;
Figure 8 shows a schematic illustration of an arrangement of a bulletproof aircraft fuselage structure according to an exemplary embodiment of the present invention;
Figure 9 shows a schematic illustration of an aircraft which is fired upon from the outside.
Figure 10 shows a schematic illustration of a reference system for a bulletproof security test; and

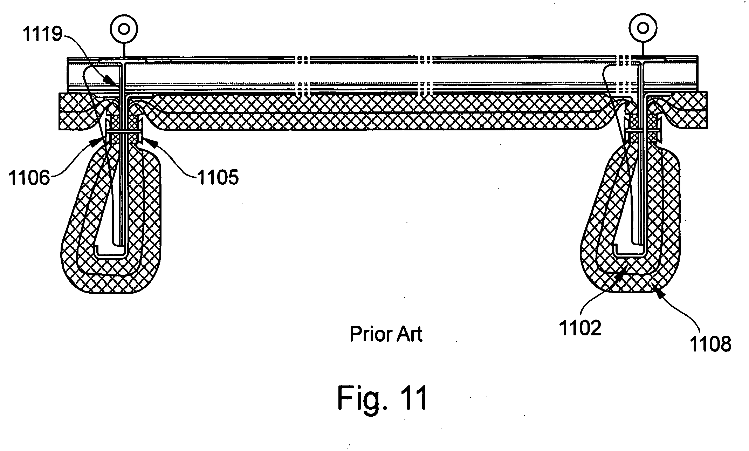

Figure 11 shows a schematic illustration of fuselage insulation according to the prior art.

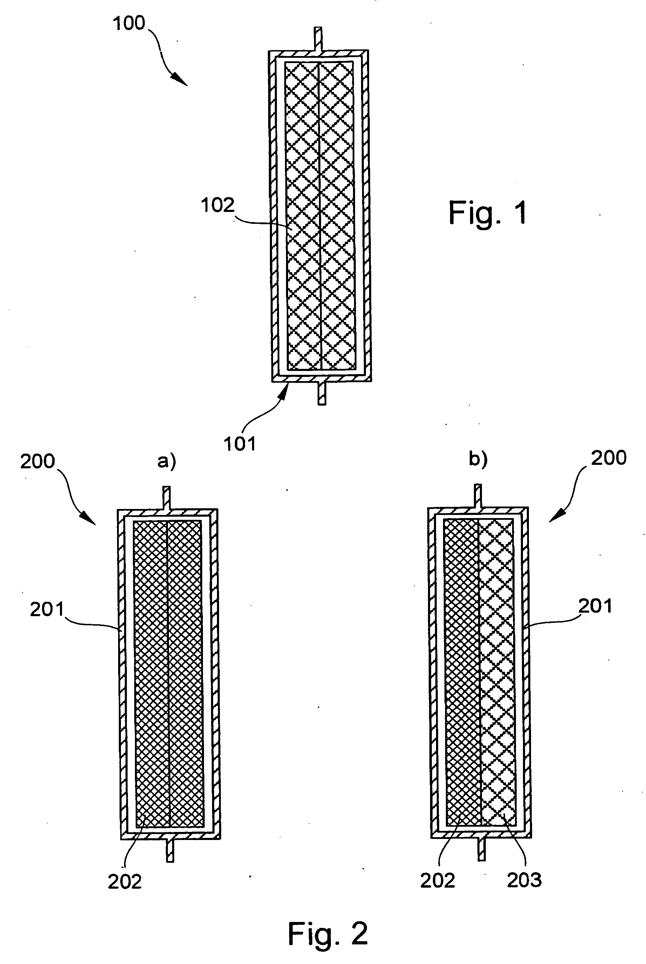

**Figure 1** shows a schematic illustration of a bulletproof envelope of an insulation package according to an exemplary embodiment of the present invention. A bulletproof insulation package 100 comprises a bulletproof envelope 101 and a core material 102, which is enclosed by the bulletproof envelope 101.

Two exemplary embodiments of an insulation package comprising a bulletproof core material are illustrated schematically in **Figure 2.** Figure 2a shows an insulation package 200 which comprises an envelope 201, in which a bulletproof core material 202 is situated. This bulletproof core material 202 fills up the insulation package 200 in Figure 2a completely, while in contrast the bulletproof core material 202 fills up the insulation package 200 in Figure 2b only partially. Partial areas of the insulation package 200 in Figure 2b are filled up using typical core material 203. This possibly results in a simplified and more cost-effective insulation package, since typical core materials may be partially used. However, it is to be ensured for this purpose that the bulletproof core material ensures sufficient bulletproof security.

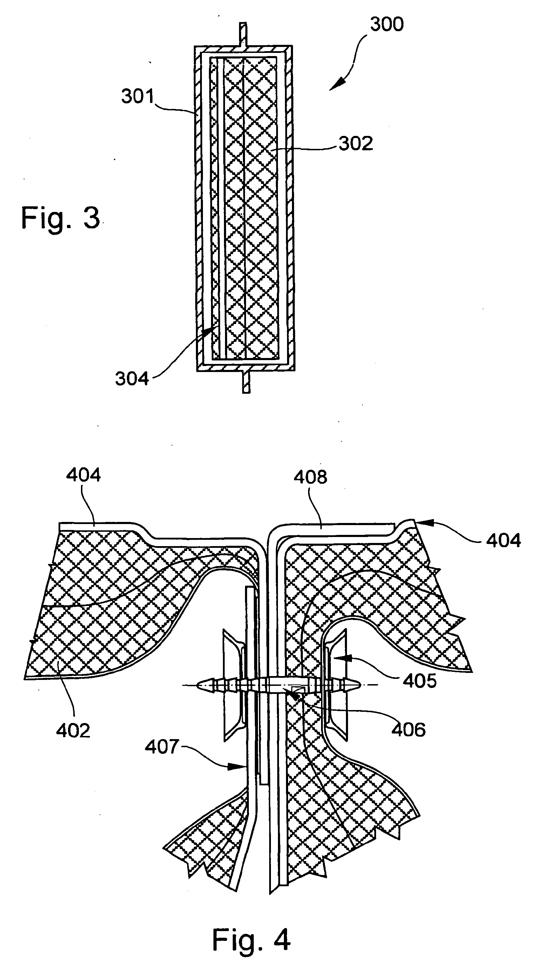

**Figure 3** specifies a schematic illustration of an insulation package comprising an additional bullet trap, the insulation package 300 also having an envelope 301, in which a core material 302 is situated. This core material 302 is not bulletproof in the exemplary embodiment of Figure 3. The envelope 301 is also not implemented as bulletproof. In order to achieve bulletproof security, the insulation package 300 comprises an additional bullet trap 304, which may be implemented as a film or foil in the core material 302, for example.

The exemplary embodiments explained in connection with Figures 1 through 3 may be combined with one another according to the present invention.

**Figure 4** shows a schematic illustration of bulletproof insulation and its attachment principle. Figure 4 shows a core material 402 of the insulation, to which a bulletproof layer 404 is attached. The insulation is attached using a first fastener 405, such as a fastening pin or insulation pin, and using a second fastener 406, for example, in form of a truncated cone body, to a frame 408. Furthermore, an overlap area is identified by the reference numeral 407 in Figure 4, in which bulletproof layers 404 of two neighboring insulation packages overlap.

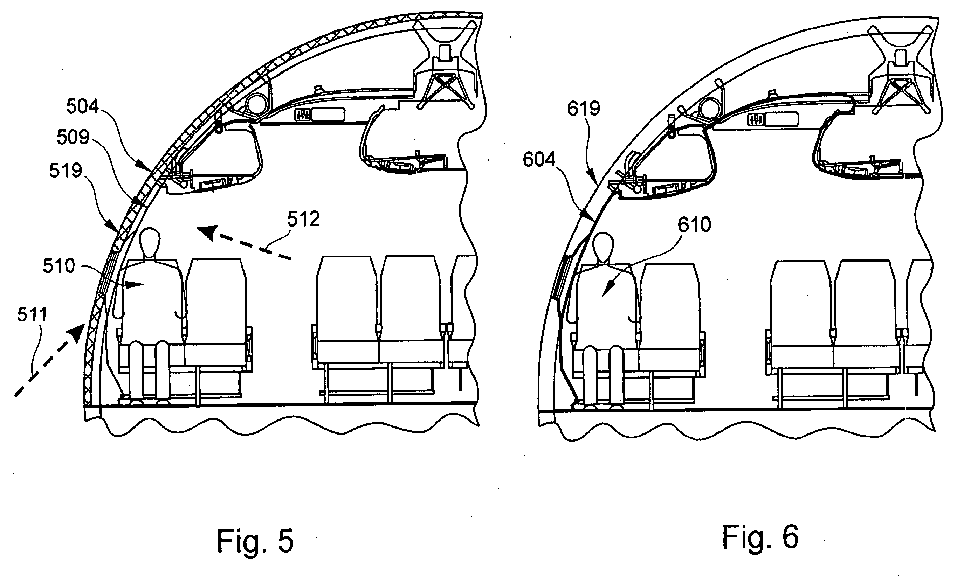

**Figure 5** shows a schematic illustration of bulletproof aircraft fuselage insulation. Figure 5 schematically shows a part of a cross-section through an aircraft body, which has aircraft fuselage insulation 504 according to an exemplary embodiment of the present invention, which fuselage insulation is implemented as bulletproof according to one of the exemplary embodiments of Figures 1 through 3. Furthermore, a cabin paneling 509 is shown, which encloses a passenger cabin to the outside toward the aircraft fuselage. Furthermore, an outer envelope of the aircraft fuselage is identified by 519 in Figure 5. A passenger 510 and a first shot direction 512, which leads from the inside the outside, and a second shot direction 511, which leads from the outside to the inside, are also schematically illustrated in Figure 5.

**Figure 6** shows a schematic illustration of an arrangement of a bulletproof aircraft cabin. Figure 6 schematically shows a part of a cross-section through an aircraft body, like Figure 5, a passenger 610 and bulletproof aircraft cabin paneling 604 being schematically illustrated. The bulletproof aircraft cabin paneling 604 encloses the passenger cabin completely and is produced from a bulletproof material, or comprises a layer made of a bulletproof material, such as an aramid fabric. The bulletproof aircraft cabin paneling 604 is shown in Figure 6 by the somewhat thicker line 604, which encloses the entire passenger cabin, including schematically shown baggage racks, for example. Furthermore, an outer envelope of the aircraft fuselage is identified by 619 in Figure 6.

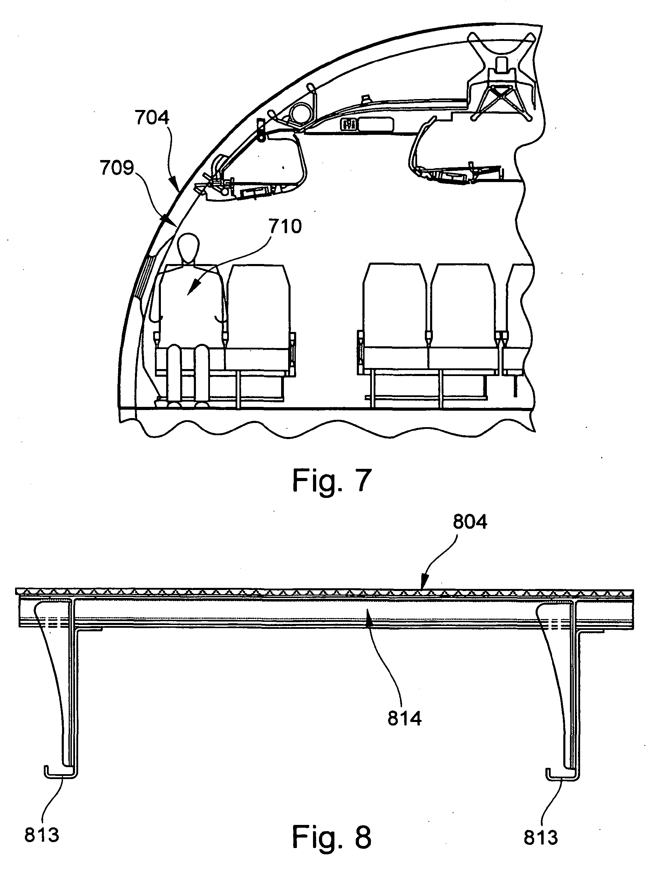

**Figure 7** shows a schematic illustration of a bulletproof aircraft fuselage. Figure 7 schematically shows, like Figure 5 and Figure 6 as well, a part of a cross-section through an aircraft body having a schematically illustrated aircraft passenger 710. In the exemplary embodiment of Figure 7, however, fuselage insulation or internal paneling 709 of the aircraft cabin is not implemented as bulletproof, but rather the aircraft fuselage has bulletproof sheeting 704, which is indicated by the somewhat greater thickness of the line 704 in Figure 7 and is illustrated in more detail in Figure 8.

**Figure 8** shows a schematic illustration of an arrangement of a bulletproof aircraft fuselage structure. Bulletproof sheeting 804 is fastened to a stringer 814 of an aircraft fuselage, this stringer being attachable using frames 813.

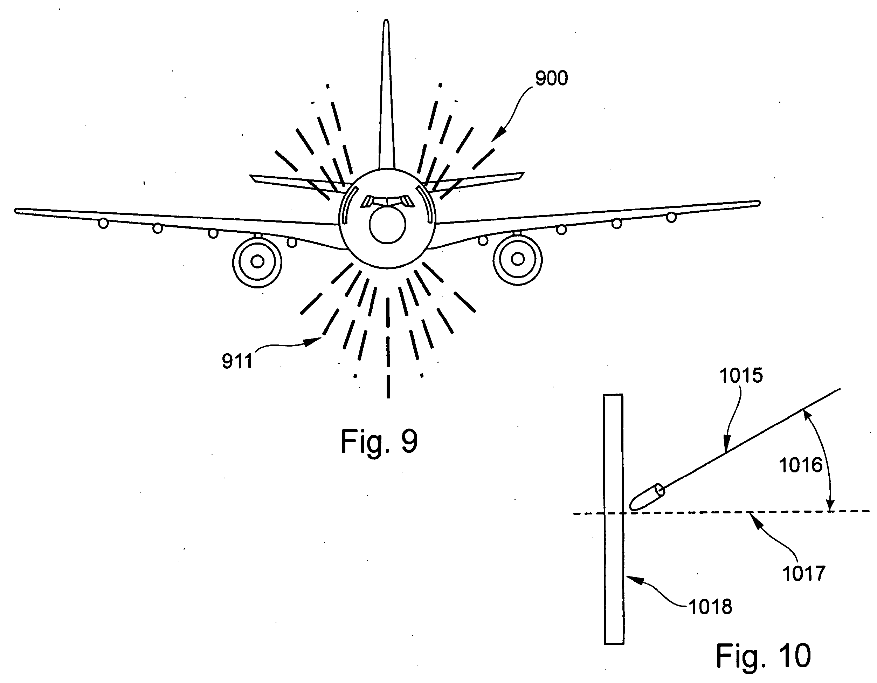

**Figure 9** shows a schematic illustration of an aircraft 900, which is fired upon from the outside 911, while in contrast **Figure 10** shows a schematic illustration of a reference system for a bulletproof security test. In Figure 10, the flight path of a projectile is identified by 1015, an angle of impact of the projectile by 1016, a surface normal line of a surface of an object by 1017, which object is to be checked using the bulletproofing test, and the surface of the object by 1018. In the bulletproof security test, the requirements in regard to bulletproof security may be checked in a similar way to that prescribed in FAA AC25.795-2. The materials usable according to the present invention are possibly capable of providing a bulletproof resistance corresponding to projectiles of the type .44 Magnum JHP, for example.

Moreover, it is to be noted that "comprising" does not exclude other elements or steps and "a" or "one" does not exclude multiples. Reference signs in the claims are not to be seen as a restriction.

## Claims

1. An aircraft fuselage which comprises:
a bulletproof layer in at least partial areas, and
an insulation structure, which comprises;
a core material; and
an envelope,
**characterised in that** the core material comprises the bulletproof layer, and the bulletproof layer comprises a honeycomb structure.

2. The aircraft fuselage of claim 1, wherein the bulletproof layer comprises multiple webs.

3. The aircraft fuselage of claim 2, wherein the multiple webs are situated overlapping.

4. The aircraft fuselage of one of claims 1 through 3, wherein the bulletproof layer comprises fibrous materials.

5. The aircraft fuselage of claim 4, wherein the fibrous materials are aromatized polyamides and/or fiberglass materials.

6. The aircraft fuselage of any one of the claims 1 through 5, wherein the bulletproof layer comprises a sandwich structure.

7. The aircraft fuselage of any one of the claims 1 through 6, wherein the bulletproof layer is implemented as a film.

8. The aircraft fuselage of any one of the claims 1 through 7, wherein the bulletproof layer is formed in the core material.

9. The aircraft fuselage of any one of the claims 1 through 8, wherein the core material is formed as the bulletproof layer.

10. The aircraft fuselage of any one of the claims 1 through 9, wherein the envelope is formed as the bulletproof layer.

11. The aircraft fuselage of one of claims 1 through 7, which also comprises:
passenger cabin paneling,
wherein the bulletproof layer is implemented as part of the passenger cabin paneling.

## Patentansprüche

1. Luftfahrzeugrumpf, aufweisend:
zumindest in Teilbereichen eine schusssichere Schicht, und
eine Isolierstruktur, welche aufweist:
ein Kernmaterial; und
eine Umhüllung,
**dadurch gekennzeichnet, dass** das Kernmaterial die schusssichere Schicht aufweist und die schusssichere Schicht eine wabenförmige Struktur aufweist.

2. Luftfahrzeugrumpf gemäß Anspruch 1, wobei die schusssichere Schicht mehrere Bahnen aufweist.

3. Luftfahrzeugrumpf gemäß Anspruch 2, wobei die mehreren Bahnen überlappend angeordnet sind.

4. Luftfahrzeugrumpf gemäß einem der Ansprüche 1 bis 3, wobei die schusssichere Schicht Fasermaterialien aufweist.

5. Luftfahrzeugrumpf gemäß Anspruch 4, wobei die Fasermaterialien aromatisierte Polyamide und/oder Glasfasermaterialien sind.

6. Luftfahrzeugrumpf gemäß einem der Ansprüche 1 bis 5, wobei die schusssichere Schicht eine Sandwichstruktur aufweist.

7. Luftfahrzeugrumpf gemäß einem der Ansprüche 1 bis 6, wobei die schusssichere Schicht als Folie ausgebildet ist.

8. Luftfahrzeugrumpf gemäß einem der Ansprüche 1 bis 7, wobei die schusssichere Schicht in dem Kernmaterial ausgebildet ist.

9. Luftfahrzeugrumpf gemäß einem der Ansprüche 1 bis 8, wobei das Kernmaterial als die schusssichere Schicht ausgebildet ist.

10. Luftfahrzeugrumpf gemäß einem der Ansprüche 1 bis 9, wobei die Umhüllung als die schusssichere Schicht ausgebildet ist.

11. Luftfahrzeugrumpf gemäß einem der Ansprüche 1 bis 7, welcher weiterhin aufweist:
eine Passagierkabinenverkleidung,
wobei die schusssichere Schicht als Teil der Passagierkabinenverkleidung ausgebildet ist.

## Revendications

1. Fuselage d'avion comportant :
une couche à l'épreuve des balles dans au moins des zones partielles, et
une structure d'isolation, laquelle comporte :
un matériau de coeur, et
une enveloppe,
**caractérisé en ce que** le matériau de coeur comporte la couche à l'épreuve des balles, et la couche à l'épreuve des balles comporte une structure en nid d'abeille.

2. Fuselage d'avion selon la revendication 1, dans lequel la couche à l'épreuve des balles comporte des bandes multiples.

3. Fuselage d'avion selon la revendication 2, dans lequel les bandes multiples se chevauchent.

4. Fuselage d'avion selon l'une des revendications 1 à 3, dans lequel la couche à l'épreuve des balles comporte des matériaux fibreux.

5. Fuselage d'avion selon la revendication 4, dans lequel les matériaux fibreux sont des polyamides aromatisés et/ou des fibres de verre.

6. Fuselage d'avion selon l'une quelconque des revendications 1 à 5, dans lequel la couche à l'épreuve des balles comporte une structure sandwich.

7. Fuselage d'avion selon l'une quelconque des revendications 1 à 6, dans lequel la couche à l'épreuve des balles est mise en oeuvre sous forme de film.

8. Fuselage d'avion selon l'une quelconque des revendications 1 à 7, dans lequel la couche à l'épreuve des balles est formée dans le matériau de coeur.

9. Fuselage d'avion selon l'une quelconque des revendications 1 à 8, dans lequel le matériau de coeur est formé en tant que couche à l'épreuve des balles.

10. Fuselage d'avion selon l'une quelconque des revendications 1 à 9, dans lequel l'enveloppe est formée en tant que couche à l'épreuve des balles.

11. Fuselage d'avion selon l'une des revendications 1 à 7, lequel comporte également :
un chemisage de cabine de passagers,
dans lequel la couche à l'épreuve des balles est mise en oeuvre comme une partie du chemisage de cabine de passagers.
